# EUROPÄISCHE PATENTSCHRIFT

(11) **EP 1 780 384 B1**
(45) Veröffentlichungstag und Bekanntmachung des Hinweises auf die Patenterteilung: **09.04.2014**
(21) Anmeldenummer: 06119442.9
(22) Anmeldetag: 24.08.2006
(51) Int. Cl.: F01M 5/00

(54) **Wärmetauscher**
Heat exchanger
Echangeur de chaleur

(30) Priorität: 30.08.2005 DE 202005013711 U; 15.11.2005 DE 202005017975 U
(43) Veröffentlichungstag der Anmeldung: 02.05.2007
(73) Patentinhaber: MANN+HUMMEL GmbH, 71638 Ludwigsburg (DE)
(72) Erfinder: Jainek, Herbert, 74074, Heilbronn (DE)

(56) Entgegenhaltungen:
- EP-A1- 1 629 878
- DE-A1- 3 923 936
- JP-U- 55 001 920

## Beschreibung

### Technisches Gebiet

Die Erfindung betrifft einen Wärmetauscher, insbesondere Ölkühler für Verbrennungsmotoren, nach dem Oberbegriff des Anspruches 1.

### Stand der Technik

Ein Wärmetauscher der eingangs genannten Art ist aus der JP55-1920U und der WO2005/031128 bekannt. Bei dem bekannten Wärmetauscher gemäß WO 2005/031128 ist vorgesehen, dass der Ölkühlerbypasskanal zumindest über den größeren Teil seiner Länge durch eine den Ölkühler trägerteilseitig abschließende Ölkühlergrundplatte oder durch eine zwischen dem Ölkühler und dem Trägerteil dichtend angeordnete Zwischenplatte verläuft. Das zu kühlende Öl wird trägerteilseitig in den Ölkühler eingeführt sowie ebenfalls trägerteilseitig wieder aus diesem herausgeführt. Dabei ist der Ölkühler trägerteilseitig mit einem im Wesentlichen metallischen Ölmodul dichtend verbunden. Die Abdichtung zwischen Ölmodul und Ölkühler erfolgt dabei axial. Eine axiale Abdichtung kann allerdings bei bestimmten Materialpaarungen zwischen Ölkühler und Ölmodul problematisch sein. Besonders bei einer Metall/Kunststoffpaarung kann eine prozesssichere Abdichtung aufgrund der verschiedenen Fertigungstoleranzen nicht immer gewährleistet werden.

Aufgabe der Erfindung ist es daher, einen Wärmetauscher der eingangs genannten Art zu schaffen, welcher die dargelegten Nachteile vermeidet und kostengünstig und einfach herzustellen ist. Diese Aufgabe wird durch den kennzeichnenden Teil des Anspruches 1 gelöst.

### Offenbarung der Erfindung

Erfindungsgemäß weist der Wärmetauscher, insbesondere Ölkühler für ein Ölmodul für Verbrennungskraftmaschinen, vorzugsweise für ein Kunststoffölmodul für Verbrennungskraftmaschinen, ein Leitungssystem zur Führung eines Wärmetauschmittels und des zu kühlenden Mediums auf. Senkrecht zu dem Leitungssystem sind lamellenartig mehrere plattenförmige Wärmetauschelemente angeordnet, wobei in den Wärmetauschelementen Bohrungen oder Öffnungen vorhanden sind, so dass diese das Leitungssystem mitbilden. Die plattenförmigen Wärmetauschelemente sind miteinander verbunden, wobei die Verbindung bevorzugt über eine Löt- oder Schweißverbindung erfolgt. Hierbei sind die plattenförmigen Wärmetauschelemente an den Außenkanten umgebogen und liegen schuppenförmig übereinander. Weiterhin weist der Wärmetauscher einen Wärmetauschmitteleinlass und einen Wärmetauschmittelauslass sowie einen Mediumeinlass und einen Mediumauslass mit einem Mediumauslassstutzen und einem Bypasskanal auf. Der Bypasskanal bildet einen Bypass für das zu kühlende Medium. Der Bypass sorgt dafür, dass bei kaltem und dadurch zähflüssigem zu kühlenden Medium, vorzugsweise dem Schmieröl einer Brennkraftmaschine, ein relativ großer Teil des Mediums unter Umgehung der Einzelkanäle des Wärmetauschers zu den Schmierstellen der Brennkraftmaschine strömt, um eine ausreichende Schmierung auch bei noch kaltem Medium zu gewährleisten. Bei steigender Temperatur des Mediums fließt ein zunehmend größerer Anteil des Mediums durch den Wärmetauscher, wodurch die Temperatur des Mediums reduziert wird, um eine thermische Schädigung des Mediums der Brennkraftmaschine durch zu hohe Mediumtemperaturen zu verhindern. Erfindungsgemäß läuft der Bypasskanal vom Mediumeinlass durch eine der Leitungen aus dem Leitungssystem und mündet anschließend in den Mediumauslassstutzen. Hierbei bildet der Bypasskanal den kürzesten und direktesten Weg zwischen Mediumeinlass und Mediumauslass. Weiterhin erstreckt sich erfindungsgemäß der Mediumauslassstutzen axial über den plattenförmigen Abschluss des Wärmetauschers hinaus. Dadurch kann der Mediumauslassstutzen dann in ein entsprechendes Gegenstück, wie z. B. ein Kunststoffölmodul, eingesteckt werden und eine radiale Dichtung zwischen Wärmetauscher und Gegenstück herstellen. Durch diese radiale Dichtung können verschiedene Fertigungstoleranzen besser abgefangen werden. Dadurch, dass der Bypasskanal ebenfalls in dem Mediumauslassstutzen mündet, sind keine zwei voneinander getrennten Auslassöffnungen, nämlich für das gekühlte Medium und das an der eigentlichen Kühlung vorbeigeführte Medium, notwendig. Eine derartige Anordnung von zwei getrennten Auslässen würde wiederum Probleme bei der dichten Verbindung mit einem Gegenstück ergeben. Ein weiterer Vorteil besteht darin, dass der Mediumauslassstutzen direkt beim Herstellungsvorgang des Wärmetauschers im Lötofen mit dem Wärmetauscher verbunden werden kann ohne einen weiteren Montageschritt notwendig zu machen.

Gemäß einer vorteilhaften Ausgestaltung der Erfindung weist der Bypasskanal im Mediumauslassstutzen ein Bypassventil auf. Das Bypassventil kann abhängig von einer Druckdifferenz zwischen dem Mediumeinlass und dem Mediumauslass des Wärmetauschers einen veränderlichen Durchlassquerschnitt freigeben, wobei bei niedrigerem Differenzdruck der Durchlassquerschnitt kleiner und bei höherem Differenzdruck der Durchlassquerschnitt größer ist. In Abhängigkeit der Mediumtemperatur und damit der Mediumviskosität ändert sich der Differenzdruck signifikant. Je höher die Mediumtemperatur ist, desto geringer ist die Mediumviskosität und umso geringer ist der Differenzdruck. So ist also gewährleistet, dass bei einer kalten Umgehungstemperatur und einer dadurch resultierenden hohen Viskosität des Mediums durch den daraus resultierenden höheren Differenzdruck ein größerer Anteil des Mediums durch den Bypasskanal und das Bypassventil strömt. Die Anordnung des Bypassventils im Mediumauslassstutzen erweist sich gerade im Hinblick auf die Herstellung des Wärmetauschers und den Platzbedarf des Wärmetauschers als äußerst vorteilhaft. Da die Kanäle und Leitungen innerhalb des Wärmetauschers nur kleine Durchmesser aufweisen und das Innenleben des Wärmetauschers somit relativ filigran aufgebaut ist, ist es schwierig, hier ein entsprechendes Bypassventil kostengünstig und einfach zu integrieren. Durch die außerhalb des eigentlichen Wärmetauschers gewählte Anordnung des Bypassventils ergibt sich einerseits der Vorteil der kostengünstigen Herstellung sowie weiterhin einer schnellen und einfachen Anpassung an die jeweiligen Anforderungen an Öffnungs- und Schließdruck des Bypassventils. Somit kann der Wärmetauscher bei verschiedenen Anwendungen einfach und schnell den Vorgaben, was die Durchflussmenge und den Öffnungs- und Schließzeitpunkt des Bypasskanals angeht, angepasst werden.

Für den Fall, dass der Mediumeinlass und der Mediumauslass nicht konzentrisch zueinander angeordnet sind, weist der Wärmetauscher in vorteilhafter Weise im Anschluss an den Rohrverlauf eine Umlenkplatte auf, derart, dass das zu kühlende Medium im Anschluss an das Durchströmen des Rohres in einen Umlenkkanal innerhalb der Umlenkplatte strömt, wobei dieser Umlenkkanal dann in den Mediumauslassstutzen mündet. Auf diese Art und Weise ist es einfach, über einen Austausch der Umlenkplatte verschiedene Anschlussgeometrien zu realisieren.

Gemäß einer vorteilhaften Ausgestaltung der Erfindung weist der Mediumauslassstutzen an seinem Ende ein im Wesentlichen zylindrisches Anschlussstück auf. Dabei sind am Anschlussstück Mittel zur radialen Abdichtung des Mediumauslassstutzens gegenüber einem weiteren Bauteil, vorzugsweise einem Kunststoffölmodul, angeordnet. Das im Wesentlichen zylindrische Anschlussstück des Mediumauslassstutzens in Form beispielsweise eines Ringkragens kann dann dabei entweder in ein hierzu geeignetes Gegenstück dichtend eingesetzt oder auf einen weiteren im Wesentlichen hohlzylindrischen Stutzen aufgesetzt werden. Dabei erfolgt die Abdichtung zwischen den beiden Bauteilen generell über eine Radialdichtung. Durch diese spezielle konstruktive Ausgestaltung des Mediumauslassstutzens ist es so einfach möglich, konstruktiv- und fertigungsbedingte Toleranzen einfach auszugleichen.

Zur Herstellung der radialen Abdichtung zwischen Wärmetauscher und dem Gegenstück weist das Anschlussstück des Mediumauslassstutzens eine außen radial umlaufende Nut zur Aufnahme eines Dichtringes auf. Der Dichtring kann dabei als O-Ring oder Quadring oder sonstige im Stand der Technik bekannte elastomere Dichtringe ausgeführt sein, es ist jedoch auch möglich, eine Dichtmasse in die umlaufende Nut einzudosieren.

Es ist vorteilhaft, wenn der Mediumauslassstutzen mit der letzten Abdeckplatte des Wärmetauschers unlösbar dicht verbunden ist. Die Verbindung kann dabei über eine Löt- oder Schweißverbindung erfolgen, es ist jedoch auch eine Klebverbindung denkbar.

Hierbei kann der Mediumauslassstutzen beispielsweise als Drehteil ausgeführt werden, wobei weiterhin eine Bypassventilaufnahme einstückig mit dem Mediumauslassstutzen verbunden ist und innerhalb des Mediumauslassstutzens angeordnet ist. Dies bewirkt eine äußerst einfache und kostengünstige Herstellungsform des Mediumauslassstutzens.

Alternativ hierzu ist es ebenfalls möglich, den Mediumauslassstutzen aus einem Strangpressprofil herzustellen. Dabei können die notwendigen Konturen im Strangpressprozess schon in der Pressmatrix herausgebildet sein, so dass es hier auch einfach möglich ist, eine von der zylindrischen Form abweichende Außenform des Mediumauslassstutzens zu verwenden. Dies kann bei besonderen Anforderungen an die Raumausnutzung und an die Verbindung zu dem Gegenstück, vorzugsweise dem Kunststoffölmodul, notwendig sein.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Kurze Beschreibung der Zeichnungen

Die Erfindung wird nachfolgend anhand eines Ausführungsbeispiels näher erläutert. Es zeigt:
- Figur 1a, 1b: eine schematische Ansicht und eine Draufsicht eines Wärmetauschers, dessen Seitenteile durch abgebogene Kragen gebildet sind,
- Figur 2a, 2b: eine schematische Ansicht und eine Draufsicht eines alternativen Ausführungsbeispiels,
- Figur 3: eine schematische Ansicht eines Ölmoduls mit angeflanschtem Wärmetauscher und
- Figur 4: eine alternative Ausgestaltung des Wärmetauscherinnenlebens.

### Ausführungsform(en) der Erfindung

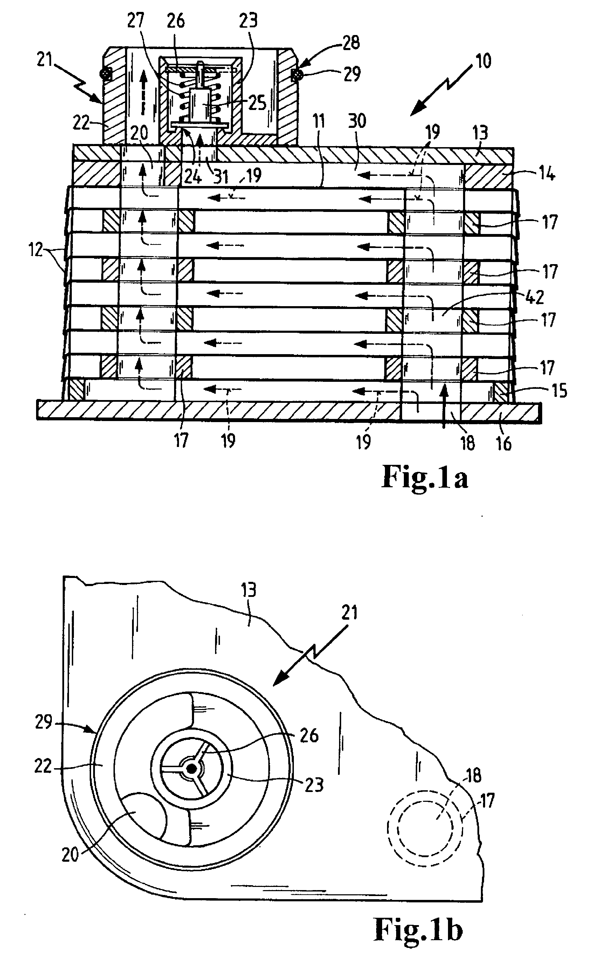

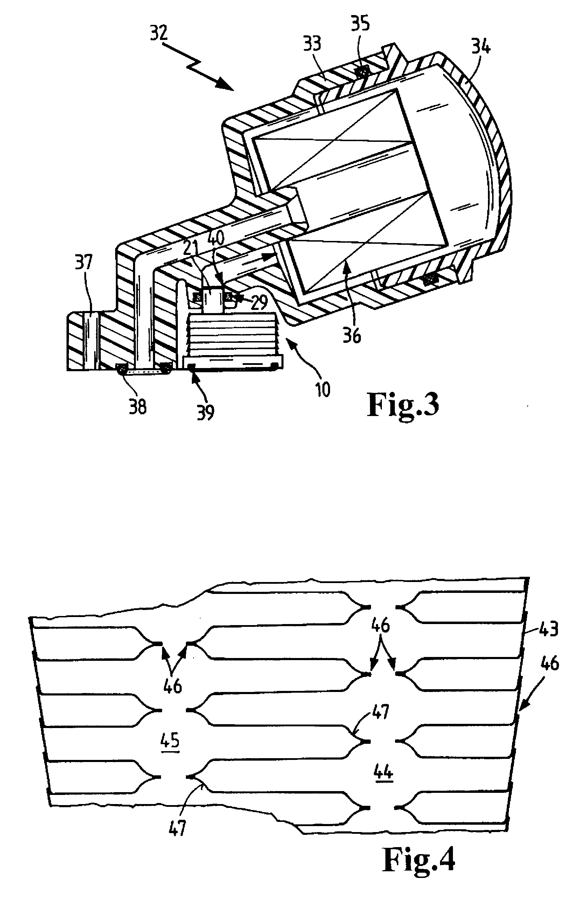

In den Figuren 1a und 1b ist schematisch ein Wärmetauscher 10 gezeigt, der aus mehreren parallel zueinander angeordneten und von einem Wärmetauschmittel durchflossenen plattenförmigen Wärmetauschelementen 11 besteht. Die Wärmetauschelemente 11 sind an den umlaufenden Außenkanten 12 abgebogen und lamellenartig zu einem Wärmetauscherpaket aufeinandergestapelt. Den oberen Abschluss des Wärmetauscherpaketes bildet eine Abdeckplatte 13 in Kombination mit einer Umlenkplatte 14. Abdeckplatte 13 und Umlenkplatte 14 können aus einem Stück hergestellt sein. Es besteht aber auch die Möglichkeit, diese zweistückig aus zwei Stanzteilen zu bilden. Den unteren Abschluss bildet ein Adapterelement 15 in Kombination mit einer Befestigungsplatte 16. Adapterelement 15 und Befestigungsplatte 16 können ebenso wie Abdeckplatte 13 und Umlenkplatte 14 aus einem Stück hergestellt sein oder aber auch zweistückig aus zwei Stanzteilen gebildet werden. Die Verbindung der einzelnen Wärmetauschelemente 11 miteinander sowie mit der Umlenkplatte 14 der Abdeckplatte 13 und dem Adapterelement 15 sowie der Befestigungsplatte 16 erfolgt durch Löten. Hierzu sind die einzelnen Bauelemente lotbeschichtet. Das gesamte Paket mit den Einzelteilen einschließlich der hier dargestellten Rohrstücke 17, welche auch als Abdichtringe zwischen den einzelnen Wärmetauschelementen 11 fungieren, wird erwärmt und dabei werden die Einzelteile miteinander verlötet. Das zu kühlende Medium, beispielsweise Öl, strömt dabei über eine Einlassöffnung 18 in Befestigungsplatte 16 und Adapterelement 15 in den Wärmetauscher 10 ein, verteilt sich dort auf die einzelnen Ebenen gemäß den Pfeilen 19 und verlässt den Wärmetauscher 10 über die Auslassöffnung 20. Im Bereich der Auslassöffnung 20 ist ein Mediumauslassstutzen 21 dichtend unlösbar auf die Abdeckplatte 13, vorzugsweise direkt beim Fertigungsprozess des Wärmetauschers, gelötet oder aufgeschweißt. Der Mediumauslassstutzen 21 weist einen Ringkragen 22 mit einer Ventilaufnahme 23 auf. Die Ventilaufnahme 23 stellt dabei auch gleichzeitig einen Ventilsitz 24 dar. In die Ventilaufnahme 23 ist ein Ventilkörper 25 eingesetzt, welcher mit dem Ventilsitz 24 eine dichte Verbindung herstellen kann, wobei der Ventilkörper 25 über ein Gegenlager 26 mit einer Feder 27 gegen den Ventilsitz 24 gepresst wird. In Abhängigkeit der Federstärke 27 lässt sich die Öffnungs- und Schließcharakteristik des Bypassventils einstellen. Am äußeren umlaufenden Rand des Ringkragens 22 ist eine umlaufende Nut 28 angeordnet, welche einen O-Ring 29 zur radialen Abdichtung mit einem hier nicht dargestellten weiteren Gehäuseteil, vorzugsweise einem Kunststoffölmodul, darstellt. Bei extrem tiefen Temperaturen strömt das zu kühlende Medium, vorzugsweise Öl, durch die Einlassöffnung 18 in den Wärmetauscher 10 ein und durchströmt direkt ein durch die Rohrstücke 17 und die Wärmetauschelemente 11 gebildetes Rohr 42 bis in einen Umlenkkanal 30, welcher durch die Kombination aus Umlenkplatte 14 und Abdeckplatte 13 gebildet wird. Von dem Umlenkkanal 30 strömt das zu kühlende Medium weiter in einen Bypassauslass 31, welcher im Mediumauslassstutzen 21 angeordnet ist. Durch die eingestellte Öffnungscharakteristik des Bypassventils lässt sich so steuern, bis zu welchen Viskositäten und Temperaturen das zu kühlende Medium direkt durch den Umlenkkanal 30 aus dem Bypassventil in den Mediumauslassstutzen 21 strömt und ab welcher Viskosität die Kühlung über die weiteren Kühlkanäle erfolgt. In dieser Figur nicht dargestellt sind die weiteren Rohre und Rohrstücke, welche zur Förderung des Wärmetauschmittels führen, dies ist jedoch im Stand der Technik wohlbekannt und beispielsweise in der EP 0 653 043 näher dargestellt. Der Mediumauslassstutzen 21 ist in diesem Ausführungsbeispiel (Figur 1) als Drehteil ausgeführt. Die Figur 4 zeigt eine weitere Möglichkeit des grundsätzlichen Aufbaus von Wärmetauschern.

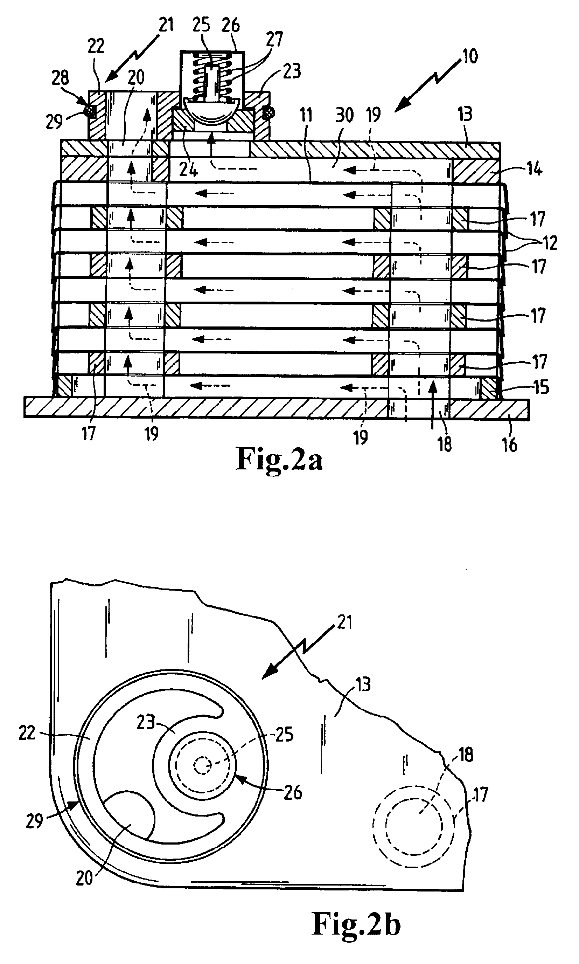

Die Figuren 2a und 2b zeigen eine hierzu geringfügig alternative Ausgestaltung des Mediumauslassstutzens 21. Den vorherigen Figuren entsprechende Bauteile sind mit den gleichen Bezugszeichen versehen. Hierbei ist der Mediumauslassstutzen 21 als Strangpressprofil ausgeführt, dabei wird die Bypassventileinheit gebildet aus einer Kombination aus Ventilsitz 24, Ventilkörper 25, Gegenlager 26, welches hier als Käfig ausgeführt ist, und Feder 27. Die gesamte Ventileinheit wird in die Ventilaufnahme 23 eingesteckt und wird bevorzugt mit dieser verpresst, sie ist aber beispielsweise auch über Löten oder Kleben mit dieser verbindbar. Durch die Ausführung als Strangpressprofil wäre es hier auch möglich, die Außenwand des Ringkragens nicht kreisringförmig, sondern in beliebigen Formen auszuführen. Dabei müsste dann der O-Ring 29 durch eine beispielsweise in die Nut eindosierte Dichtung ersetzt werden. Eine weitere Möglichkeit der Abdichtung wäre dann der Einsatz einer axial wirkenden Dichtung. Ein Strangpressprofil bietet den Vorteil einer kostengünstigen, rationalisierten Herstellung sowie der Möglichkeit einer Platz sparenden Bauweise, da das Ventil nicht konzentrisch zum Ringkragen angeordnet sein muss.

Figur 3 zeigt die Anordnung eines Wärmetauschers 10 in Kombination mit einem Ölmodul 32, vorzugsweise Kunststoffölmodul. Den vorherigen Figuren entsprechende Bauteile sind mit den gleichen Bezugszeichen versehen. Das Kunststoffölmodul 32 weist ein Kunststoffgehäuse 33, vorzugsweise aus Polyamid 6 mit Glasfaserverstärkung, und einen dichtend über eine Dichtung 35 mit diesem Gehäuse verbundenen Deckel 34 auf. Im Gehäuse 33 ist dichtend ein Filterelement 36 angeordnet. Diese Darstellung soll nur schematisch die Anordnung zeigen und erhebt keinen Anspruch auf Vollständigkeit. Kunststoffölmodule sind im Stand der Technik bekannt, und der prinzipielle Aufbau kann dort entnommen werden. Über eine Schraubverbindungsöffnung 37 wird das Kunststoffölmodul beispielsweise mit einem hier nicht dargestellten Motorblock einer Brennkraftmaschine verbunden und über Dichtungen 38 gegenüber diesem abgedichtet. Der Wärmetauscher 10 wird ebenfalls über Dichtungen 39 mittels Befestigungsplatte 16 am hier nicht dargestellten Motorblock der Brennkraftmaschine befestigt. Weiterhin weist das Kunststoffölmodul 32 eine radiale Öffnung 40 auf, in welche der Mediumauslassstutzen 21 eingeführt wird. Zur radialen Abdichtung des Mediumauslassstutzens 21 gegenüber der Radialöffnung 40 wird der Dichtring 29 verwendet. Die radiale Abdichtung birgt gegenüber einer axialen Abdichtung den Vorteil nicht mehrere Toleranzen überbrücken zu müssen. Bei einer axialen Abdichtung kann sich durch ungünstig zueinander liegende Axialtoleranzen der einzelnen Bauteile zueinander ein Abheben der Dichtung und damit eine Undichtigkeit ergeben.

Die Figur 4 zeigt einen alternativen prinzipiellen Aufbau eines Wärmetauschers unter Weglassung der Rohrstücke. Hier wird das Leitungssystem durch tiefgezogene Blechwannen 43 hergestellt. Diese weisen wechselseitige Auskröpfungen 47 auf, welche dann bei aufeinander liegenden Wannen 43 wechselseitige Öffnungen bilden. Hierdurch entstehen dann dicht von einander getrennte Flüssigkeitsräume 44, 45 für das zu kühlende Medium und die Kühlflüssigkeit. Die lotbeschichteten Blechwannen 43 werden dann ebenfalls im Lötofen an ihren Berührstellen 46 miteinander verlötet. Zur Vergrößerung der wärmeaustauschenden Oberfläche werden häufig noch hier nicht dargestellte Turbulenzbleche zwischen die Wannen 43 eingelegt. Auch dieser Aufbau ist im Stand der Technik wohlbekannt und braucht nicht tiefer ausgeführt werden.

## Patentansprüche

1. Ölmodul, vorzugsweise Kunststoffölmodul für Verbrennungskraftmaschinen, umfassend einen Ölkühler (10), ein Kunststoffgehäuse (33), ein in diesem Kunststoffgehäuse dichtend angeordnetes Filterelement (36) und einen dichtend über eine Dichtung mit dem Kunststoffgehäuse verbundenen Deckel (34), der Ölkühler aufweisend mehrere im Wesentlichen parallel zueinander Leitungen zur Herstellung eines Leitungssystems zur Führung eines Wärmetauschmittels und des zu kühlenden Mediums sowie lamellenartig und senkrecht zu den Leitungen angeordnete plattenförmige Wärmetauschelemente (11), wobei die Leitungen zumindest teilweise durch die Wärmetauschelemente gebildet werden, wobei die plattenförmigen Wärmetauschelemente an den Außenkanten umgebogen sind und schuppenförmig übereinander liegen, einen Wärmetauschmitteleinlass und einen Wärmetauschmittelauslass sowie einen Mediumeinlass (18) und einen Mediumauslass (20) mit einem Mediumauslassstutzen (21) und einem Bypasskanal, welcher einen Bypass für das zu kühlende Medium bildet, wobei der Bypasskanal vom Mediumeinlass (18) durch eine der Leitungen verläuft und anschließend in den Mediumauslassstutzen (21) mündet, wobei sich der Mediumauslassstutzen (21) axial über den plattenförmigen Abschluss des Ölkühlers (10) hinaus erstreckt und wobei der Mediumauslassstutzen (21) ein im Wesentlichem zylindrisches Anschlussstück aufweist, **dadurch gekennzeichnet, dass** der Bypasskanal im Mediumauslassstutzen (21) ein Bypassventil aufweist, wobei der Bypasskanal im Anschluss an den Leitungsverlauf eine Umlenkplatte (14) aufweist, derart, dass das zu kühlende Medium in einen Umlenkkanal (30) strömt, welcher in den Mediumauslassstutzen (21) mündet, wobei das Anschlussstück Mittel zur radialen Abdichtung (29) des Mediumauslassstutzens gegenüber dem Kunststoffgehäuse aufweist und der Mediumauslassstutzen in eine radiale Öffnung des Kunststoffölmoduls eingeführt ist, wobei das Kunststoffölmodul (32) über eine Schraubverbindung mit einem Motorblock einer Brennkraftmaschine verbindbar ist und wobei der Ölkühler über Dichtungen (39) mittels einer Befestigungsplatte (16) an einem Motorblock befestigbar ist.

2. Ölmodul nach dem Anspruch 1, **dadurch gekennzeichnet, dass** das Anschlussstück eine außen radial umlaufende Nut zur Aufnahme eines Dichtringes aufweist.

3. Ölmodul nach einem der vorhergehenden Ansprüche, **dadurch gekennzeichnet, dass** der Mediumauslassstutzen mit einer Abdeckplatte des Ölkühlers unlösbar dicht verbunden ist.

4. Ölmodul nach einem der vorhergehenden Ansprüche, **dadurch gekennzeichnet, dass** der Mediumauslassstutzen ein Drehteil ist, wobei weiterhin eine Bypassventilaufnahme einstückig mit diesem verbunden im Mediumauslassstutzen (21) angeordnet ist.

5. Ölmodul nach einem der vorhergehenden Ansprüche, **dadurch gekennzeichnet, dass** der Mediumauslassstutzen (21) aus einem Strangpressprofil hergestellt ist.

## Claims

1. Oil module, preferably plastic oil module for internal combustion engines, comprising an oil cooler (10), a plastic housing (33), a filter element (36) sealingly disposed in this plastic housing, and a cover (34) sealingly connected by means of a gasket with the plastic housing, the oil cooler featuring a plurality of ducts running substantially parallel to each other for realizing a duct system for guiding a heat exchanging agent and the medium to be cooled as well as plate-shaped heat exchanging elements (11) disposed in lamellar shape and perpendicular in relation to the ducts, wherein the ducts are realized at least partially by the heat exchanging elements, wherein the plate-shaped heat exchanging elements are bent at the outer edges and imbricated, a heat exchanging agent inlet and a heat exchanging agent outlet as well as a medium inlet (18) and a medium outlet (20) with a medium outlet port (21) and a bypass duct, which forms a bypass for the medium to be cooled, wherein the bypass duct extends from the medium inlet (18) through one of the ducts and finally ends in the medium outlet port (21), wherein the medium outlet port (21) extends axially over the plate-shaped end of the oil cooler (10) and wherein the medium outlet port (21) features a substantially cylindrical connecting piece, **characterized in that** the bypass duct features in the medium outlet port (21) a bypass valve, wherein the bypass duct features downstream of the duct extension a deflector plate (14) in such a way that the medium to be cooled flows into a deflector duct (30) which ends in the medium outlet port (21), wherein the connecting piece features means for a radial sealing (29) of the medium outlet port with respect to the plastic housing and the medium outlet port is introduced into a radial opening of the plastic oil module, wherein the plastic oil module (32) is connectable via a screwed connection with an engine block of an internal combustion engine and wherein the oil cooler is attachable via gaskets (39) by means of a mounting plate (16) at an engine block.

2. Oil module according to claim 1, **characterized in that** the connecting piece features an outside radial circumferential groove for accommodating a seal ring.

3. Oil module according to one of the above claims, **characterized in that** the medium outlet port is undetachably and sealingly connected with a cover plate of the oil cooler.

4. Oil module according to one of the above claims, **characterized in that** the medium outlet port is a rotating part, wherein furthermore a bypass valve receptacle is disposed in the medium outlet port (21) and connected in one piece with same.

5. Oil module according to one of the above claims, **characterized in that** the medium outlet port (21) is manufactured from an extruded section.

## Revendications

1. Module de lubrification, de préférence module de lubrification en plastique pour machines à combustion interne, comprenant un refroidisseur d'huile (10), un boîtier en plastique (33), un élément filtrant (36) disposé de manière étanche dans ce boîtier en plastique et un couvercle (34) relié de manière étanche, au moyen d'un joint, au boîtier en plastique, le refroidisseur d'huile présentant plusieurs conduites essentiellement parallèles les unes aux autres en vue de former une tuyauterie destinée à transporter un fluide d'échange de chaleur et le fluide à refroidir et présentant également des éléments d'échange de chaleur (11) en forme de plaques et placés en forme de lamelles à la verticale des conduites, les conduites étant formées, au moins en partie, par les éléments d'échange de chaleur, les éléments d'échange de chaleur en forme de plaques étant repliés aux arêtes extérieures et se chevauchant en forme de nappe, une entrée de fluide d'échange de chaleur et une sortie de fluide d'échange de chaleur, de même qu'une entrée de fluide (18) et une sortie de fluide (20) avec une tubulure de sortie de fluide (21) et un canal de dérivation qui dérive le fluide à refroidir, le canal de dérivation partant de l'entrée de fluide (18), traversant une des conduites puis débouchant dans la tubulure de sortie de fluide (21), la tubulure de sortie de fluide (21) évoluant en sens axial au-delà de l'extrémité en forme de plaque du refroidisseur d'huile (10) et la tubulure de sortie de fluide (21) présentant une pièce de raccord essentiellement cylindrique, **caractérisé en ce que** le canal de dérivation est doté dans la tubulure de sortie de fluide (21) d'une soupape de dérivation, le canal de dérivation comportant, en aval de la conduite, une plaque de dérivation (14) de sorte que le fluide à refroidir coule dans un canal de dérivation (30) qui débouche dans la tubulure de sortie de fluide (21), la pièce de raccord présentant des éléments d'étanchéité radiale (29) de la tubulure de sortie de fluide par rapport au boîtier en plastique et la tubulure de sortie de fluide étant introduite dans une ouverture radiale du module de lubrification en plastique, le module de lubrification en plastique (32) pouvant être relié, par l'intermédiaire d'un raccord vissé, à un bloc de moteur d'un moteur à combustion interne et le refroidisseur d'huile pouvant être fixé au moyen de joints (39), par l'intermédiaire d'une plaque de fixation (16), à un bloc de moteur.

2. Module de lubrification selon la revendication 1, **caractérisé en ce que** la pièce de raccord comporte une rainure circulaire radiale extérieure faisant office de logement pour une bague d'étanchéité.

3. Module de lubrification selon l'une des revendications précédentes, **caractérisé en ce que** la tubulure de sortie de fluide est reliée de manière étanche et inamovible à une plaque de recouvrement du refroidisseur d'huile.

4. Module de lubrification selon l'une des revendications précédentes, **caractérisé en ce que** la tubulure de sortie de fluide est un élément rotatif, un logement de soupape de dérivation étant également disposé dans la tubulure de sortie de fluide (21) et relié en un bloc avec cette tubulure.

5. Module de lubrification selon l'une des revendications précédentes, **caractérisé en ce que** la tubulure de sortie de fluide (21) est fabriquée à partir d'un profilé extrudé.
